Europäisches Patentamt

European Patent Office

Office européen des brevets

(11) Numéro de publication: **0 362 039**

**A1**

## (12) DEMANDE DE BREVET EUROPEEN

(21) Numéro de dépôt: 89402613.7

(51) Int. Cl.5: **B60P 1/44**

(22) Date de dépôt: 25.09.89

(30) Priorité: **28.09.88 FR 8812650**

(43) Date de publication de la demande:
**04.04.90 Bulletin 90/14**

(84) Etats contractants désignés:
**AT BE CH DE GB IT LI NL SE**

(71) Demandeur: **SOCIETE ANONYME HYDRIS**
**Z.I. Bellevue Route de Domagne**
**F-35220 Chateaubourg(FR)**

(72) Inventeur: **Tortellier, Christian Serge**
**Le Ponloup Servon Sur Vilaine**
**F-35530 Noyal Sur Vilaine(FR)**

(74) Mandataire: **Hoisnard, Jean-Claude et al**
**Cabinet Beau de Lomenie 55, rue**
**d'Amsterdam**
**F-75008 Paris(FR)**

(54) **Hayon élévateur comportant un dispositif de maintien de l'horizontalité de sa plate-forme.**

(57) L'invention est relative à un hayon élévateur constitué par une plate-forme (3-4) susceptible d'être placée en position horizontale ; un bras d'attelage (9) reliant la plate-forme à un châssis ; un vérin de levage (15) attelé entre le châssis (1) et le bras (9) destiné au réglage de la position relative de la plate-forme par rapport au châssis ; et un vérin de réglage d'inclinaison (12) attelé entre le bras et la plate-forme, destiné au réglage de l'inclinaison de la plate-forme par rapport à l'horizontale, ladite plate-forme étant à cet effet montée pivotante autour d'un axe horizontal (11) par rapport au bras (9).

Selon l'invention, la plate-forme est constituée par un cadre (3) pivotant par rapport au bras (9) et attelé au vérin de réglage d'inclinaison (12) ; par un plancher supérieur (4) qui est lui-même pivotant par rapport au cadre (3), autour d'un axe horizontal (5) ; et par un organe de réglage du pivotement relatif éventuel du plancher par rapport au cadre.

Une application est la réalisation d'un hayon aux performances accrues.

Fig.1

EP 0 362 039 A1

On connaît déjà un hayon élévateur constitué par une plate-forme susceptible d'être placée en position horizontale et de supporter une charge devant être déplacée dans la direction verticale : un ensemble de bras d'attelage reliant ladite plate-forme à un châssis, tel que le châssis d'un véhicule et par rapport auquel la plate-forme est montée pivotante ; au moins un vérin de levage attelé entre ledit châssis et l'un des bras de l'ensemble de bras d'attelage, destiné au réglage de la position relative de la plate-forme par rapport audit chassis, dans la direction verticale, et possédant une chambre de travail susceptible d'être alimentée en un fluide sous pression, dont l'effet est antagoniste de celui de la dite charge en ce qui concerne le déplacement vertical éventuel de la plate-forme ; et, au moins un vérin de réglage d'inclinaison attelé entre ledit ensemble et ladite plate-forme, destiné au réglage de l'inclinaison de la plate-forme par rapport à l'horizontale, et possédant une chambre de travail susceptible d'être alimentée en un fluide sous pression, dont l'effet est antagoniste de celui de ladite charge en ce qui concerne le pivotement éventuel de la plate-forme, ladite plate-forme étant à cet effet montée pivotante autour d'un axe horizontal par rapport à au moins l'un des bras de l'ensemble de bras d'attelage.

Les hayons élévateurs de ce type permettent le déplacement d'une charge entre deux niveaux différents, la plate-forme supportant la charge restant horizontale, et, lorsque la plate-forme touche le sol, ils permettent une légère inclinaison de cette plate-forme jusqu'à ce que son extrémité touche elle-même le sol, rendant possible et aisé le déplacement de charges diverses, notamment de chariots.

D'autres hayons élévateurs ne possèdent pas la faculté d'inclinaison de leur plate-forme, de sorte que, lorsqu'ils reposent sur un sol inégal, leur lisière de chargement peut ne pas toucher le sol. Le seuil de chargement qui résulte d'une telle configuration complique grandement les chargements.

L'invention a pour but de proposer un nouveau type de hayon élévateur, dont la plate-forme de chargement proprement dite reste le plus longtemps possible horizontale, mais qui, dans la dernière phase de sa descente a cependant la possibilité d'être inclinée légèrement pour supprimer tout seuil de chargement.

A cet effet, dans un ensemble de hayon élévateur tel que précédemment défini, selon l'invention, la plate-forme est constituée par un cadre monté pivotant par rapport à l'ensemble de bras d'attelage et attelé audit vérin de réglage d'inclinaison de la plate-forme ; par un plancher supérieur qui est lui-même monté pivotant par rapport audit cadre, autour d'un axe horizontal, tel qu'un axe transversal ; et par un organe de réglage du pivotement relatif éventuel dudit plancher par rapport au cadre.

Les avantageuses dispositions suivantes sont, en outre, de préférence adoptées :
- l'organe de réglage du pivotement du plancher de la plate-forme comprend un vérin à fluide ayant une chambre de travail reliée à celle du ou des vérins de réglage d'inclinaison de la plate-forme, le volume desdites chambres de travail des vérins de réglage de pivotement du plancher et de réglage d'inclinaison de la plate-forme étant susceptible d'être isolé de toute alimentation en fluide sous pression et de tout réservoir de décharge ;
- l'ensemble du hayon élévateur comprend un vérin qui constitue une mémoire du volume de fluide contenu dans la chambre de travail du ou des vérins de réglage d'inclinaison de la plate-forme dans la configuration basse de celle-ci dans laquelle une partie de l'ensemble de bras d'attelage est en appui sur une butée, tel que le sol, de limitation de son déplacement, et qui possède une chambre de réception de fluide, reliée à la chambre de travail du ou des vérins de réglage d'inclinaison de la plate-forme, cependant que ledit vérin, qui fait partie de l'organe de réglage du pivotement du plancher de la plate-forme, est constitué par ledit vérin lui-même constituant une mémoire ;
- un autre vérin, constituant une autre mémoire, a une chambre de réception de fluide également reliée à la chambre de travail du ou des vérins de réglage d'inclinaison de la plate-forme, le volume de la chambre de travail du vérin de réglage d'inclinaison de la plate-forme, des chambres de réception de fluide du vérin et de l'autre vérin constituant des mémoires, et des conduits de liaison de ces chambres étant susceptible d'être isolé de toute alimentation en fluide sous pression et de tout réservoir de décharge ;
- l'autre vérin constituant une autre mémoire et le vérin constituant une mémoire ont un cylindre commun unique.

L'avantage principal de l'invention réside bien dans la double faculté, d'une part, de maintenir l'horizontalité recherchée de la plate-forme de chargement, le plus longtemps possible, d'autre part, de supprimer tout seuil de chargement lorsque cela est nécessaire.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une vue latérale d'un hayon élévateur conforme à l'invention ;

- la figure 2 est une vue, en coupe partielle, suivant II-II, de la figure 1, du hayon dans une première configuration d'utilisation ;

- la figure 3 est une vue analogue à celle de la figure 2, du même hayon, mais dans une deuxième configuration d'utilisation ;

- les figures 4, 5 et 6 sont des vues schématiques, analogues à celle de la figure 1, du hayon élévateur dans trois configurations distinctes d'utilisation ;

- la figure 7 représente le circuit de commande du fonctionnement du hayon élévateur des figures 1 à 5 ; et,

- la figure 8 représente une variante d'un constituant du circuit de la figure 7.

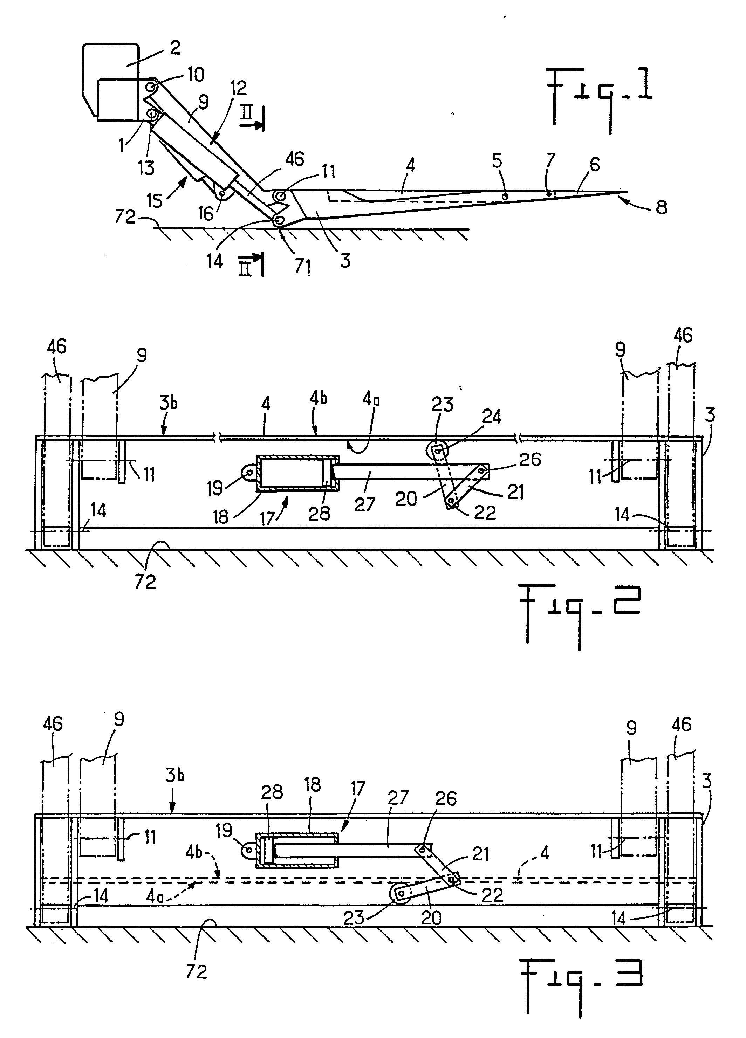

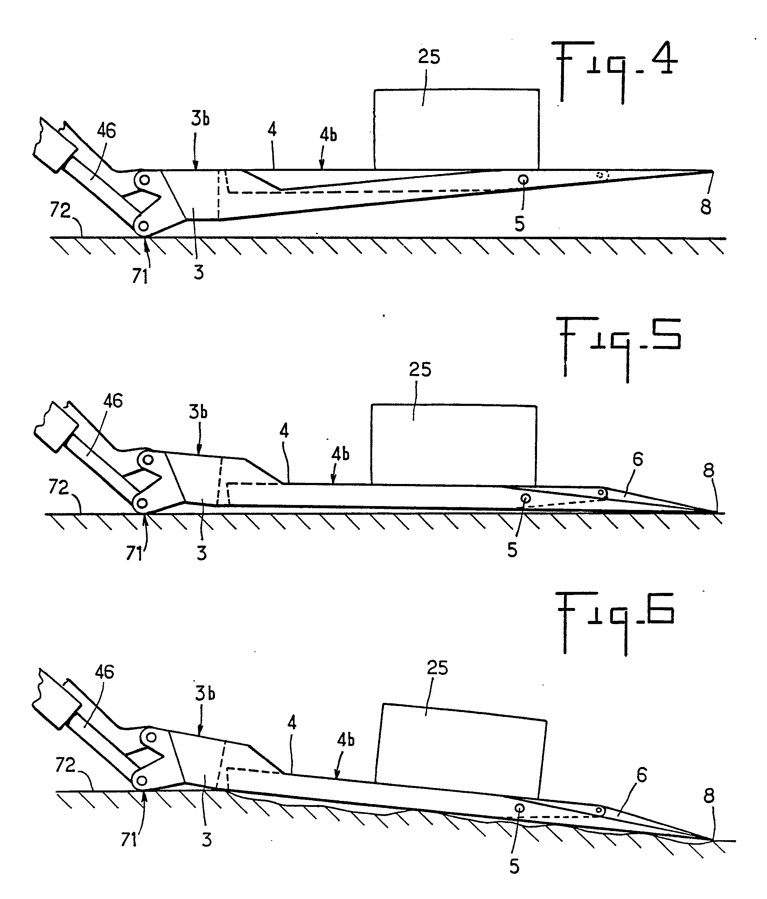

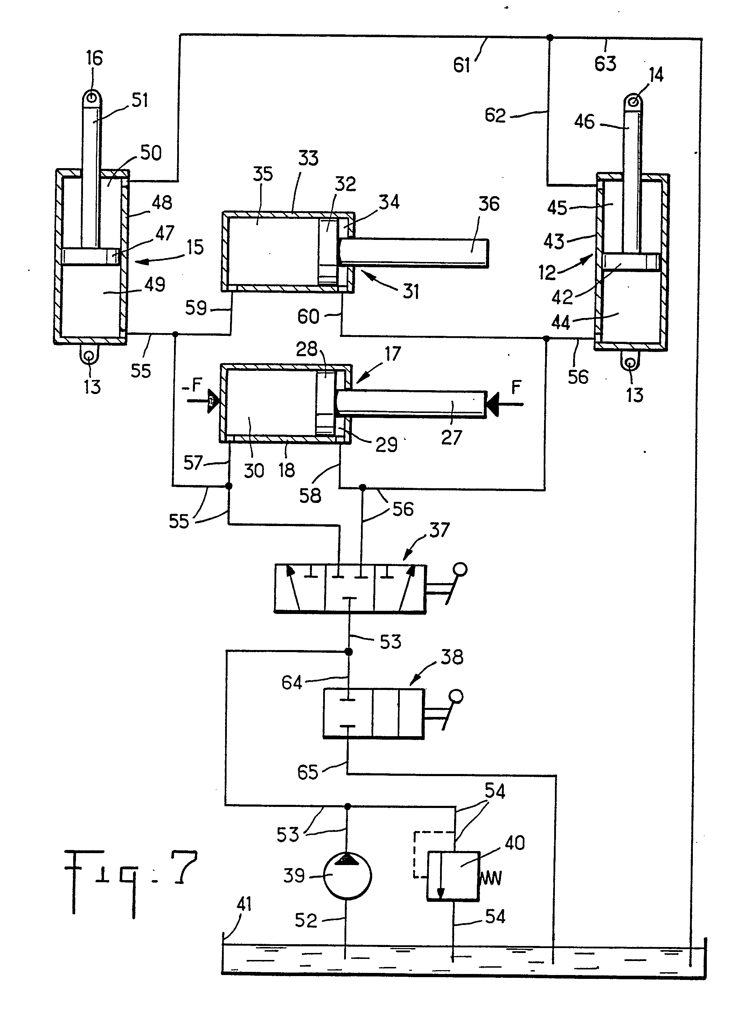

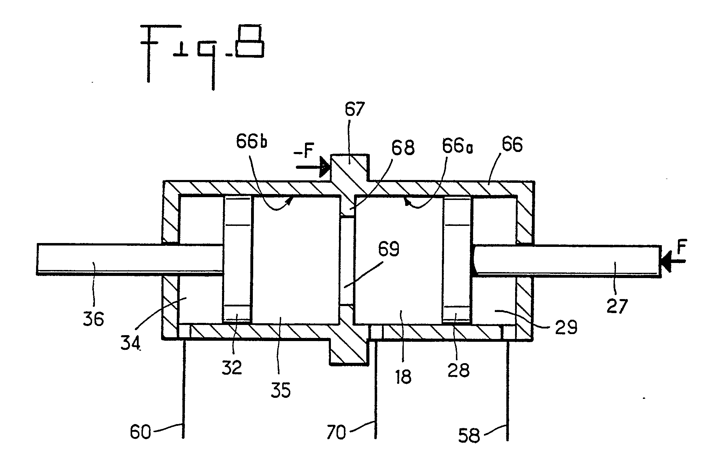

Le hayon des figures 1 et 2 comporte :
- une pièce 1 d'adaptation, qui est fixée sur le châssis 2 d'un véhicule ;
- un cadre rigide 3 de la plate-forme ;
- un plancher supérieur 4, qui est monté sur le cadre 3, à pivotement autour d'un axe horizontal transversal 5 disposé à l'avant dudit plancher, et approximativement au tiers avant du cadre 3 ;
- un volet 6 monté pivotant à l'extrémité avant du plancher 4 au moyen d'un axe 7 parallèle à l'axe 5, ce volet 6 s'étendant jusqu'à la lisière extrême avant 8 du cadre 3 sur une longueur égale environ au tiers de celle du plancher 4 ;
- deux bras 9 (un seul visible sur la figure 1) articulés, chacun, sur la pièce d'adaptation 1 autour d'un axe 10 et sur la partie arrière du cadre 3 autour d'un axe 11 ;
- deux vérins 12 de réglage d'inclinaison du cadre (un seul visible sur la figure 1) articulés, chacun, sur la pièce d'adaptation 1 autour d'un axe 13 et sur la partie arrière du cadre 3 autour d'un axe 14, les axes 10-11-14 et 13 étant disposés, dans la configuration de la figure 1, aux sommets d'un parallélogramme ;
- deux vérins de levage 15 (un seul représenté sur la figue 1) articulés, chacun, sur la pièce d'adaptation 1 autour de l'axe 13 et sur le bras 9 voisin autour d'un axe 16 ;
- un premier vérin à mémoire 17, qui est disposé transversalement entre les deux groupes d'axes 11-14, dont le cylindre 18 est articulé sur le cadre 3 autour d'un axe 19 ;
- une sorte d'équerre constituée par deux bras 20-21 solidaires l'un de l'autre, qui sont montés pivotant sur le cadre 3 autour d'un axe 22 ;
- une roulette 23 montée rotative à une extrémité du bras 20 autour d'un axe 24 et sur laquelle est en appui la face inférieure 4a du plancher 4, sous l'effet du poids propre dudit plancher, et de la charge 25 qu'il est susceptible de supporter (figures 4, 5 et 6) ;
- un axe 26 d'articulation de l'extrémité de la tige de piston 27 du premier vérin à mémoire 17.

Le circuit de la figure 7 comprend :

- les vérins de réglage d'inclinaison 12 du plancher 4 par rapport au cadre 3 (un seul représenté), qui sont branchés en parallèle, le piston 42 de chacun d'eux délimitant, à l'intérieur du cylindre 43, une chambre 44 de grande section et une chambre 45 de petite section susceptible de contenir partiellement la tige de piston 46 ;
- les vérins de levage 15 (un seul représenté) qui sont branchés en parallèle, le piston 47 de chacun d'eux délimitant à l'intérieur du cylindre 48 une chambre 49 de grande section et une chambre 50 de petite section susceptible de contenir partiellement la tige de piston 51 ;
- le premier vérin à mémoire 17, dont le piston 28 délimite à l'intérieur du cylindre 18 une chambre 29 de petite section transversale et une chambre 30 de grande section transversale ;
- un deuxième vérin à mémoire 31, dont le piston 32 délimite à l'intérieur du cylindre 33 une chambre 34 de petite section transversale et une chambre 35 de grande section transversale, la chambre 34 étant susceptible de contenir partiellement la tige de piston 36 solidaire du piston 32 ;
- un premier distributeur de fluide 37, à trois positions ;
- un deuxième distributeur de fluide 38, à deux positions ;
- une pompe 39,
- un clapet de décharge taré 40, de protection contre les surpressions ;
- un réservoir de fluide 41.

Ce circuit comporte les conduits suivants :
- le conduit d'aspiration 52 de la pompe 39, reliant celle-ci au réservoir 41 ;
- le conduit de refoulement 53 de la pompe 39, reliant celle-ci au premier distributeur de fluide 37 ;
- un conduit 54, qui relie le conduit de refoulement 53 au réservoir 41 et sur lequel est disposé le clapet de décharge 40 ;
- un conduit 55 reliant le premier distributeur de fluide 37 aux chambres 49 des vérins de levage 15 ;
- un conduit 56 reliant le premier distributeur de fluide 37 aux chambres 44 des vérins d'inclinaison 12 ;
- des conduits 57,58 reliant les chambres 30,29 du premier vérin à mémoire 17, aux conduits 55,56, respectivement ;
- des conduits 59,60 reliant les chambres 35,34 du deuxième vérin à mémoire 31 aux conduits 55,56, respectivement ;
- des conduits 61,62 reliant des chambres 50,45 des vérins de levage 15 et de réglage d'inclinaison 12, respectivement, à un conduit 63, lui-même raccordé au réservoir 41 ;
- un conduit 64, reliant le conduit 53 au deuxième distributeur de fluide 38 ; et,
- un conduit 65 reliant le deuxième distributeur de fluide 38 au réservoir 41.

Les trois positions du premier distributeur de fluide 37 correspondent :

- la première position, à la mise en communication des conduits 53 et 55, et à l'obturation du conduit 56 ;
- la deuxième position, à la mise en communication des conduits 53 et 56, et, à l'obturation du conduit 55 ; et,
- la troisième position, aux obturations des conduits 53, 55 et 56.

Les deux positions du deuxième distributeur de fluide 38 correspondent :

- la première position, à l'obturation des conduits 64 et 65 ; et.
- la deuxième position, à la mise en communication des conduits 64 et 65.

La figure 8 représente une variante de réalisation des premier et deuxième vérins à mémoire 17,31. Dans cette réalisation, il n'y a plus qu'un seul corps de cylindre 66, qui est par exemple muni d'une collerette externe centrale 67 et d'une butée intérieure 68. Le piston 28 évolue à l'intérieur d'une première partie 66a du cylindre 66, le piston 32 évoluant à l'intérieur d'une deuxième partie 66b du cylindre 66, lesdites parties 66a et 66b étant séparées par la butée intérieure 68, qui comporte un orifice central 69 permettant la communication libre des chambres 18 et 35. Celles-ci peuvent donc être reliées au conduit 55 par un seul conduit 70, au lieu des deux conduits 57,59 de la réalisation de la figure 7.

Le fonctionnement du hayon qui vient d'être décrit est exposé ci-après.

Dans la configuration de la figure 7, les deux distributeurs de fluide 37, 38 sont placés dans leurs premières positions respectives.

A partir de la figure 1 (ou de la figure 4), dans lesquelles le cadre 3 repose sur le sol 72 par son extrémité inférieure arrière 71, les axes 10-11-14 et 13 étant disposés au sommet d'un parallélogramme et la face supérieure 4b du plancher 4 étant horizontale et dans le même plan que la face supérieure 3b du cadre 3, et les deux distributeurs de fluide 37,38 placés dans leurs premières positions respectives, on note que les chambres 29, 34 ont leurs volumes minimaux respectifs, et que, par conséquent, le fluide sous pression refoulé par la pompe 39 parvient dans les chambres 49 des vérins de levage 15, par les conduits 53 et 55. Le parallélogramme des axes 10-11-14 et 13 est déformé, mais reste parallélogramme, et la face 4b du plancher 4 reste horizontale, tout en étant déplacée vers le haut. Le hayon s'élève.

Il est possible de faire cesser cette élévation à tout moment en plaçant le premier distributeur de fluide 37 dans sa troisième position.

Si ce premier distributeur est maintenu dans sa première position, le hayon parvient jusqu'à sa hauteur maximale de levage qui correspond à la fin de course des pistons 47 des vérins de levage 15 et à leur configuration dans laquelle les chambres 49 ont leurs volumes maximaux.

A partir de cette configuration, en plaçant le premier distributeur 37 dans sa deuxième position, on commande l'extension des vérins de réglage d'inclinaison 12 de manière à faire pivoter le cadre 3 autour de l'axe 11 jusqu'à disposer le plancher 4, non plus horizontalement, mais verticalement, à l'arrière du véhicule qui en est équipé.

Les commandes inverses du premier distributeur de fluide 37 permettent naturellement le retour du hayon dans la configuration des figures 1 et 4.

A partir de la configuration des figures 2 et 4, le premier distributeur de fluide 37 étant placé dans sa première position et le deuxième distributeur de fluide 38 étant placé dans sa deuxième position, le poids du plancher 4 et/ou de la charge 25 a pour effet de faire pivoter le cadre 3 vers l'avant jusqu'à ce que la lisière 8 touche le sol 72. La face supérieure 3b du contour du cadre 3 prend une position inclinée par rapport à un plan horizontal. Le fluide contenu dans les chambres 44 est évacué dans la chambre 29 du premier vérin à mémoire 17. Le volume de fluide évacué hors des chambres 44 se retrouve exactement à l'intérieur de la chambre 29 jusqu'à la fin de course éventuelle du piston 28. Entre-temps, la tige de piston 27, en déplaçant l'axe 26, a fait pivoter les deux bras 20-21 dans le sens d'abaissement de la roulette 23. La longueur de bras 20 a été calculée pour que la différence de hauteur, dont a été abaissé l'axe 5 par rapport à l'axe 11 au cours du pivotement du cadre 3 autour de l'axe 11, est égale à l'abaissement de la roulette 23 par rapport à sa position initiale. Ainsi, l'avant et l'arrière du plancher 4 ont été abaissés de la même hauteur, permettant le maintien de l'horizontalité de la face supérieure 4b du plancher 4 jusqu'au remplissage maximal de la chambre 29. Le volet 6 a pivoté librement autour de l'axe 7 et constitue un becquet de raccordement entre le sol 72 et la face supérieure horizontale 4b du plancher 4 (figures 3 et 5).

Il se peut cependant que, sur des sols particulièrement inégaux, la fin de course du piston 28, qui laisse horizontale la face supérieure 4b du plancher 4, laisse un seuil entre la lisière 8 et le sol 72. Dans ce cas, il est souhaitable de permettre un pivotement supplémentaire du cadre 3 autour de l'axe 11, même s'il n'est plus possible de maintenir horizontale la face 4b du plancher 4. C'est ce qui a été réalisé dans la configuration de la figure 6, dans laquelle la lisière 8 touche de nouveau le sol 72, mais dans laquelle également cette face supérieure 4b n'est plus horizontale.

Pour ce faire, il a suffit de maintenir le premier distributeur 37 dans sa première position et le deuxième distributeur 38 dans sa deuxième position. Le poids du hayon et/ou de la charge 25 a continué à provoquer la rentrée des tiges 46 des pistons à l'intérieur des cylindres 43 des vérins de réglage de pivotement 12. Le fluide encore contenu dans les chambres 44 ne peut plus être reçu dans la chambre 28, entièrement pleine, mais peut encore être dirigé vers la chambre 34 du deuxième vérin à mémoire 31, en une quantité qui sera retrouvée exactement ultérieurement à l'intérieur de cette chambre 34.

Lorsqu'à partir de la configuration de la figure 6, l'utilisateur veut relever le hayon, il lui suffit de placer les deux distributeurs de fluide 37 et 38 dans leurs premières positions respectives. Le fluide refoulé par la pompe 39 pénètre d'abord dans la chambre 35 et repousse le piston 32 qui refoule le fluide, précédemment emmagasiné dans la chambre 34, hors de cette chambre 34, vers les chambres 44 ce qui fait pivoter le cadre 3 en sens inverse du précédent, fait décoller la lisière 8 hors de contact avec le sol 72 et rétablit l'horizontalité de la face 4b du plancher 4. Ensuite, le fluide refoulé par la pompe 39 pousse le piston 28 du premier vérin à mémoire 17, qui refoule à son tour, hors de la chambre 29, le fluide qui avait été préalablement emmagasiné. Les chambres 44 des vérins de réglage de pivotement sont alimentées en fluide sous pression jusqu'à ce que le cadre 3 et le plancher 4 aient retrouvé leur position de la figure 4. Bien entendu, le système à bras 20-21, roulette 23 et axe 22 aura permis, entre la configuration de la figure 5 et celle de la figure 4, de maintenir horizontale la face supérieure 4b du plancher 4.

Il convient de remarquer que, lorsque le premier distributeur de fluide 37 est placé dans sa première position, le volume total des chambres 44, de la chambre 29, de la chambre 34 et des conduits de liaison 56, 58, 60 de ces chambres est isolé aussi bien de l'alimentation en fluide sous pression (pompe 39), que du réservoir 41 : c'est précisément ce qui permet à la chambre 29 du premier vérin à mémoire 17, et, quand un deuxième vérin à mémoire 31 est prévu, comme dans la réalisation décrite, à la chambre 34 de ce deuxième vérin à mémoire, de conserver "la mémoire" des quantités de fluide permettant de replacer horizontale automatiquement la face 4b du plancher 4.

La variante de la figure 8 permet d'alléger et de rendre plus compact l'ensemble des premier et deuxième vérins à mémoire de la figure 7. A noter que des efforts F et - F agissent sur le premier vérin à mémoire 17 ou sur le vérin de la figure 8, compte tenu de l'action du poids du plancher 4 et/ou de la charge 25 sur la roulette 23 et les bras 20-21, ce qui tend à provoquer la rentrée de la tige de piston 27 à l'intérieur du cylindre correspondant.

L'invention n'est pas limitée aux réalisations décrites, mais en couvre au contraire toutes les variantes qui pourraient leur être apportées sans sortir de leur cadre, ni de leur esprit.

**Revendications**

1. Ensemble d'un hayon élévateur constitué par :
- une plate-forme (3-4) susceptible d'être placée en position horizontale (4b) et de supporter une charge (25) devant être déplacée dans la direction verticale,
- un ensemble de bras d'attelage (1-9-3-12) reliant ladite plate forme à un châssis (2), tel que le châssis d'un véhicule et par rapport auquel la plate-forme est montée pivotante,
- au moins un vérin de levage (15) attelé entre ledit châssis (1) et l'un (9) des bras de l'ensemble de bras d'attelage,
destiné au réglage de la position relative de la plate-forme par rapport audit châssis, dans la direction verticale, et possédant une chambre de travail (49) susceptible d'être alimentée en un fluide sous pression, dont l'effet est antagoniste de celui de la dite charge (25) en ce qui concerne le déplacement vertical éventuel de la plate-forme, et,
- au moins un vérin de réglage d'inclinaison (12) attelé entre ledit ensemble et ladite plate-forme, destiné au réglage de l'inclinaison de la plate-forme par rapport à l'horizontale, et possédant une chambre de travail (44) susceptible d'être alimentée en un fluide sous pression, dont l'effet est antagoniste de celui de ladite charge (25) en ce qui concerne le pivotement éventuel de la plate-forme, ladite plate-forme étant à cet effet montée pivotante autour d'un axe horizontal (11) par rapport à au moins l'un (9) des bras de l'ensemble de bras d'attelage,
caractérisé en ce que la plate-forme est constituée par un cadre (3) monté pivotant (11) par rapport à l'ensemble de bras d'attelage (9), et attelé audit vérin de réglage d'inclinaison (12) de la plate-forme, par un plancher supérieur (4) qui est lui-même monté pivotant par rapport audit cadre, autour d'un axe horizontal (5), tel qu'un axe transversal, et par un organe (17) de réglage du pivotement relatif éventuel dudit plancher (4) par rapport au cadre (3).

2. Ensemble d'un hayon élévateur selon la revendication 1, caractérisé en ce que l'organe de réglage du pivotement du plancher de la plate-forme comprend un vérin à fluide (17) ayant une chambre de travail (29) reliée à celle (44) du ou des vérins de réglage d'inclinaison (12) de la plate-forme, le volume desdites chambres de travail (29 et 44) des vérins (17) de réglage de pivotement du plancher et de réglage d'inclinaison (12) de la plate-forme étant susceptible d'être isolé (37) de toute alimentation en fluide sous pression et de tout réservoir de décharge.

3. Ensemble d'un hayon élévateur selon la revendication 2, caractérisé en ce que, de manière connue en soi, il comprend un vérin (17) qui constitue une mémoire du volume de fluide contenu dans la chambre de travail (44) du ou des vérins de réglage d'inclinaison (12) de la plate-forme dans la configuration basse de celle-ci dans laquelle une partie (9) de l'ensemble de bras d'attelage est en appui sur une une butée, tel que le sol (72), de limitation de son déplacement, et qui possède une chambre (29) de réception de fluide, reliée à la chambre de travail (44) du ou des vérins de réglage d'inclinaison de la plate-forme, et en ce que ledit vérin, qui fait partie de l'organe de réglage du pivotement du plancher de la plate-forme, est constitué par ledit vérin lui-même (17) constituant une mémoire.

4. Ensemble d'un hayon élévateur selon la revendication 3, caractérisé en ce qu'un autre vérin (31), constituant une autre mémoire, a une chambre (34) de réception de fluide également reliée à la chambre de travail (44) du ou des vérins de réglage d'inclinaison (12) de la plate-forme, le volume de la chambre de travail (44) du vérin de réglage d'inclinaison de la plate-forme, des chambres (29 et 34) de réception de fluide du vérin (17) et de l'autre vérin (31) constituant des mémoires, et des conduits de liaison de ces chambres étant susceptible d'être isolé (37) de toute alimentation en fluide sous pression et de tout réservoir de décharge.

5. Ensemble d'un hayon élévateur selon la revendication 4, caractérisé en ce que l'autre vérin (31) constituant une autre mémoire et le vérin (17) constituant une mémoire ont un cylindre commun unique (66).

Fig.1

Fig.2

Fig.3

Fig.4

Fig.5

Fig.6

Fig. 7

Fig.8

Office européen
des brevets

## RAPPORT DE RECHERCHE EUROPEENNE

Numero de la demande

EP  89 40 2613

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2491015 (TORTELLIER) <br> * page 5, ligne 34 - page 7, ligne 20; figures 1-12 * | 1-3 | B60P1/44 |
| A | US-A-3977544 (D'HOLLANDER) <br> * colonne 2, ligne 13 - colonne 4, ligne 45; figures 1-10 * | 1 | |
| A | FR-A-1428017 (VEREINIGTE FLUGTECHNISCHE WERKE) <br> * abrégé; figures * | 1 | |
| P,A | DE-A-3724226 (VERHULST) <br> * colonne 1, ligne 60 - colonne 4, ligne 31; figures 1-12 * | 1 | |

|  | DOMAINES TECHNIQUES RECHERCHES (Int. Cl.5 ) |
|---|---|
|  | B60P |

Le présent rapport a été établi pour toutes les revendications

| Lieu de la recherche | Date d'achèvement de la recherche | Examinateur |
|---|---|---|
| LA HAYE | 09 JANVIER 1990 | VANNESTE M.A.R. |